# EUROPÄISCHE PATENTSCHRIFT

(11) **EP 1 434 186 B1**
(45) Veröffentlichungstag und Bekanntmachung des Hinweises auf die Patenterteilung: **14.02.2007**
(21) Anmeldenummer: 03103652.8
(22) Anmeldetag: 02.10.2003
(51) Int. Cl.: G08G 1/16, G01S 15/00

(54) **Abstandsmessvorrichtung**
Distance measuring apparatus
Dispositif pour mesurer une distance

(30) Priorität: 24.12.2002 DE 10261018
(43) Veröffentlichungstag der Anmeldung: 30.06.2004
(73) Patentinhaber: ROBERT BOSCH GMBH, 70442 Stuttgart (DE)
(72) Erfinder: Hoenes, Frank, 71254 Ditzingen (DE); Krause, Ulrich, 47057 Duisburg (DE)

(56) Entgegenhaltungen:
- EP-A- 1 153 804
- CA-A1- 2 351 138
- DE-A1- 10 037 128
- DE-A1- 19 808 181

## Beschreibung

### Stand der Technik

Die Erfindung geht aus von einer Abstandsmessvorrichtung nach der Gattung des Hauptanspruchs. Es sind schon Abstandsmesssysteme zur Einparkunterstützung in Kraftfahrzeugen bekannt, bei denen Sensoren zur Abstandsmessung an dem Fahrzeug angeordnet sind. Die Sensoren sind insbesondere als Ultraschallsensoren ausgeführt, die ein Ultraschallsignal zu einem Hindernis aussenden, das von dem Hindernis wieder reflektiert wird. Aus der Laufzeit wird dann der Abstand zwischen dem Ultraschallsensor und dem Hindernis bestimmt. Vorzugsweise sind die Sensoren zur Abstandsmessung in einem Stoßfänger des Fahrzeugs integriert, so dass der Abstand zwischen dem Stoßfänger und dem Hindernis bestimmt wird. Bei der Messung können einerseits direkte Messungen vorgenommen werden, bei denen der aussendende Sensor das reflektierende Signal selbst wieder erfasst. Andererseits sind auch Kreuzmessungen möglich, bei denen ein anderer Sensor das reflektierte Signal erfasst. Nähert sich das Hindernis dem Fahrzeug an, wird eine entsprechende Abstandsinformation an den Fahrer ausgegeben, mit der der Fahrer auf das Hindernis hingewiesen wird. Gegebenenfalls kann eine Warnung für die verschiedenen Stoßfänger bzw. für verschiedene Fahrzeugseiten jeweils unabhängig voneinander an den Fahrer übermittelt werden, so dass er zusätzlich einen Hinweis darauf erhält, aus welcher Richtung sich das Hindernis dem Fahrzeug nähert. Im Allgemeinen wird der minimale Abstand zwischen dem Fahrzeug und dem Hindernis berechnet und ausgegeben. Insbesondere erfolgt bei einer zu großen Annäherung an das Hindernis über einen vorgegebenen Mindestabstand hinaus eine optische und/oder akustische Warnung des Fahrers, um eine Kollision des Fahrzeugs mit dem Hindernis zu vermeiden. Der Mindestabstand ist einerseits von der Einbaugeometrie der Sensoren und von deren

Messbereich bzw. deren Sichtfenster abhängig. So können z.B. sehr nah am Fahrzeug befindliche Hindernisse in einem toten Winkel des Sensors liegen, so dass sie nicht erfasst werden können. Der Mindestabstand ist daher fest vorgegeben und beinhaltet dabei einen Sicherheitsabstand, der eine Kollision des Fahrzeugs mit dem Hindernis mit Sicherheit zu verhindern hilft. Werden jedoch von dem Benutzer an dem Fahrzeug bauliche Veränderungen vorgenommen, bleibt der Mindestabstand unverändert, so dass gegebenenfalls eine Kollision des Fahrzeugs mit einem Hindernis erfolgen kann, ohne dass der Fahrer durch die Abstandsmessvorrichtung gewarnt wird.

Aus der DE 100 37 128 ist dieses Problem in der Form bekannt, daß, wenn ein Caravan am Auto angehängt ist, die Abstandswarnung nicht mehr funktionieren kann und abgeschaltet werden muss. Als Lösung wird hier vorgeschlagen, einfach einen zweiten Sensor an der Anhängerrückseite anzubringen, und diesen als Abstandssensor zu verwenden.

### Vorteile der Erfindung

Die erfindungsgemäße Abstandsmessvorrichtung mit den Merkmalen des Hauptanspruchs hat demgegenüber den Vorteil, dass die Abmaße von Teilen, die an dem Fahrzeug angeordnet werden und die in einen Raumbereich zwischen einer Erfassungsvorrichtung und dem Hindernis hineinragen, bei der Abstandsbestimmung zwischen dem Fahrzeug und dem Hindernis berücksichtigt werden. Hierdurch wird der Fahrer davon entbunden, bei einem Einparkvorgang selbständig die Ausdehnung solcher, am Fahrzeug angeordneter Teile, die über die übrige Fahrzeugkontur hinausragen, gesondert einzukalkulieren. Dies können einerseits Fahrzeugteile selbst, Zusatzanbauten am Fahrzeug aber auch von dem Fahrzeug lediglich transportierte Teile sein. Es handelt sich hierbei insbesondere um solche am Fahrzeug anbringbare Teile, die nicht zur Fahrzeugkarosserie als solche gehören und die entweder als abnehmbare Serienbauteile am Fahrzeug angeordnet sind, die nachträglich als Zusatzausstattung am Fahrzeug angebaut werden oder die gegebenenfalls abnehmbar am oder im Fahrzeug für eine vorübergehende Zeit befestigt sind. Hierunter sind Bauteile zu verstehen, die für die Fahrfunktion des Fahrzeugs nicht notwendig sind und die im allgemeinen dem Benutzer einen Zusatznutzen bieten, der nicht für alle Benutzer des Fahrzeugs, zumindest nicht für die gesamte Benutzungsdauer, erforderlich ist. Beispiele hiefiir sind z.B. ein zusätzlich an der Fahrzeugrückseite angeordnetes Reserverad, ein ebenfalls an der Fahrzeugrückseite, insbesondere bei Bussen oder Kleinbussen, angeordnetes Fahrrad, eine Anhängerkupplung, eine über die Fahrzeugkontur hinausragende Last, wie z.B. ein besonderer Gepäckträger bzw. ein aus dem Kofferraum oder einer Heckklappe herausragendes Gepäckstück, oder ein überstehendes Schild, z.B. ein Nummernschild oder eine Wamtafel. Der Fahrer kann bei der Verwendung der erfmdungsgemäßen Abstandswamvorrichtung sicher sein, dass der von ihm einzuhaltende Mindestabstand zwischen dem durch die zusätzlich an dem Fahrzeug angeordneten Teile und damit dem Fahrzeug und einem Hindernis bei einem Fahrmanöver gewahrt bleibt. Hierzu kann gleichermaßen von einer Auswerteeinheit der einzuhaltende Mindestabstand erhöht oder rechnerisch, mit dem gleichen Effekt, der gemessene Abstand zwischen der Erfassungsvorrichtung und dem Hindernis entsprechend vermindert werden, um eine gleichermaßen geartete Warnung an einen Fahrer ausgeben zu können.

Durch die in den Unteransprüchen aufgeführten Maßnahmen sind vorteilhafte Weiterbildungen und Verbesserungen der im Hauptanspruch angegeben Abstandsmessvorrichtung möglich. Besonders vorteilhaft ist, die Anbringung des über die Fahrzeugkontur hinausragenden und in den Raum zwischen der Erfassungsrichtung und dem Hindernis hineinragenden Teils mittels einem Sensor automatisch zu erfassen. Hierdurch kann die Abstandsmessvorrichtung die Abstandsbestimmung so durchführen, dass einerseits bei dem nicht angeordneten Teil die volle Manövrierfähigkeit des Fahrzeugs ausgenutzt werden kann, während andererseits eine mögliche Kollision vermieden werden kann.

Besonders vorteilhaft ist, die Erfassungsvorrichtung mit einer Vielzahl von einzelnen Sensoren auszustatten, deren Daten sowohl einzeln, als auch getrennt ausgewertet werden können. Einerseits kann hierdurch ein größerer Raumbereich erfasst werden und andererseits ist es möglich, auch in vorteilhafter Weise die Messdaten verschiedener Sensoren miteinander zu verknüpfen, um die Auflösung zu vergrößern und um insbesondere eine räumliche Ortung eines Hindernisses bzw. eine Formbestimmung des Hindernisses durchzuführen.

Es ist ferner vorteilhaft, den einzelnen Sensoren Zonen zuzuordnen, so dass in Abhängigkeit von dem in den Raum zwischen der Erfassungsvorrichtung und dem Hindernis ragenden Teils jeder Zone ein entsprechender Offsetwert zugeordnet werden kann, der von dem gemessenen Abstand zwischen der Erfassungsvorrichtung und dem Hindernis abgezogen wird bzw. der zu einem einzuhaltenden Mindestabstand in der jeweiligen Zone hinzuaddiert wird. Hierdurch wird die rechnerische Auswertung dahingehend vereinfacht, dass nicht für jede Ortskoordinate ein konkreter Abstandswert bestimmt werden muss, sondern dies jeweils nur für jede Zone zu geschehen braucht. Insbesondere durch einen fließenden Übergang zwischen Abstandsgrenzen können hierbei Unstetigkeiten in der Erfassungskurve und damit schwankende Messergebnisse in der für den Fahrer vorgesehenen Anzeige zur Abstandswarnung vermieden werden.

### Zeichnung

Ausführungsbeispiele der Erfmdung sind in der Zeichnung dargestellt und in der nachfolgenden Beschreibung näher erläutert.

Es zeigen
Figur 1 eine Aufsicht auf eine schematische Darstellung eines Fahrzeugs an einem Hindernis,
Figur 2 eine Seitenansicht des Fahrzeugs gemäß der Figur 1,
Figur 3 eine Aufsicht auf einen Detailbereich eines weiteren Ausführungsbeispiels der Erfindung im Bereich des Stoßfängers eines Fahrzeugs.

### Beschreibung des Ausführungsbeispiels

Die vorliegende Abstandsmessvorrichtung wird insbesondere für Kraftfahrzeuge verwendet und dient dabei vor allem Fahrmanövern bei niedrigen Geschwindigkeiten, z.B. einem Einparken in eine Parklücke. Es können dabei an einer beliebigen Fahrzeugseite über die übrige Kontur des Fahrzeugs hinausragende Bauteile berücksichtigt werden. Im Folgenden ist die vorliegende Erfindung anhand eines Ausführungsbeispiels erläutert, bei dem an der Fahrzeugrückseite Bauteile über den Stoßfänger hinausragend angeordnet sind.

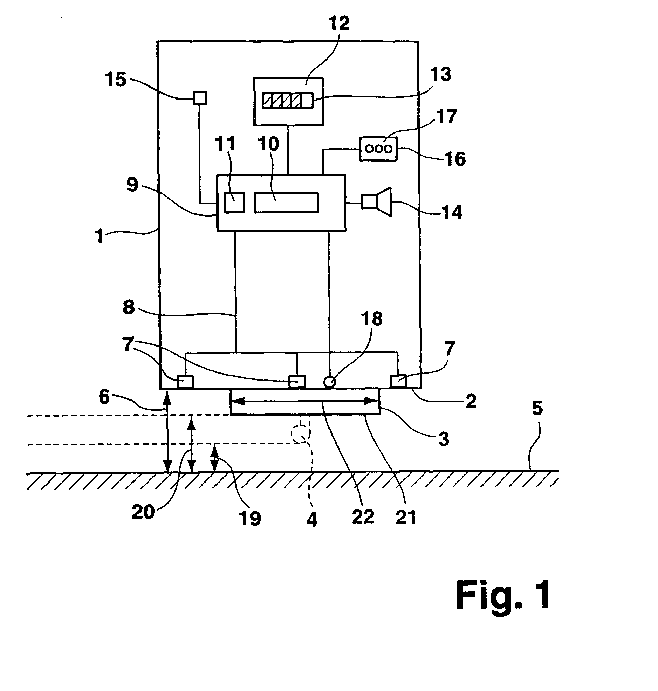

In der Figur 1 ist ein Kraftfahrzeug 1 dargestellt, an dessen Fahrzeugrückseite 2 ein Reserverad 3 angeordnet ist, das über einen die Fahrzeugrückseite 2 abschließenden und bildenden Stoßfänger bei einer Betrachtung in Aufsicht, wie sie in der Figur 1 dargestellt ist, hinausragt. Optional kann auch eine in der Figur 1 gestrichelt dargestellte Anhängerkupplung 4 zusätzlich über die Fahrzeugrückseite 2 hinausragen. Das Kraftfahrzeug 1 ist mit seiner Fahrzeugrückseite 2 parallel zu einer Hauswand 5 ausgerichtet. Die Fahrzeugrückseite 2 weist einen ersten Abstand 6 zu der Hauswand 5 auf. An der Fahrzeugrückseite 2 sind drei Sensoren 7 angeordnet, die vorzugsweise als Ultraschallsensoren ausgeführt sind. Die Sensoren 7 senden ein Schallsignal aus, das in dem hier vorliegenden Fall von der Hauswand 5 reflektiert und von den Sensoren 7 wieder aufgenommen wird. Aus der Laufzeit, die das Schallsignal für den Weg von der Fahrzeugrückseite 2 zu der Hauswand 5 und zurück benötigt, lässt sich der Abstand der Fahrzeugrückseite 2 zu der Hauswand 5 auf Basis der Schallgeschwindigkeit berechnen.

Die Berechnung kann einerseits in den Sensoren 7 selbst ausgeführt werden, so dass die Abstandsdaten über Datenleitungen 8 an eine Auswerteeinheit 9 in dem Kraftfahrzeug 1 weitergeleitet werden. In einem weiteren Ausführungsbeispiel können auch lediglich die Messdaten an die Auswerteinheit 9 weitergeleitet werden, die dann aus den übertragenen Messdaten den ersten Abstand 6 zwischen dem Kraftfahrzeug 1 und der Hauswand 5 bestimmt. Die Auswerteeinheit 9 weist eine Recheneinheit 10 zur Auswertung der gemessenen Abstandsdaten auf. Ferner weist die Auswerteeinheit 9 eine Speichereinheit 11 auf, in dem ein Mindestabstand des Kraftfahrzeugs zu möglichen Hindernissen abgelegt ist. In einer bevorzugten Ausführungsform ist für jede Fahrzeugseite ein solcher Mindestabstand in der Speichereinheit 11 abgelegt. Gegebenenfalls kann auch ein Konturverlauf für jede Fahrzeugseite festgelegt werden, der die Fahrzeugoberfläche beschreibt. Die Auswerteeinheit 9 ist mit einer Anzeigeeinheit 12 verbunden, bei der die Abstandswerte zwischen dem Kraftfahrzeug zu Hindernissen in der Umgebung des Kraftfahrzeugs dargestellt werden. Bei dem hier gezeigten Ausführungsbeispiel sind in einer Balkenanzeige 13 verschiedene farbige Felder vorgesehen, die entsprechend einer Annäherung an ein Hindernis zunehmend aufleuchten. In einer weiteren Ausführungsform kann der Abstand zu einem Hindernis auch mittels einer digitalen Anzeige des Abstandswerts in Metern, Zentimetern oder einer anderen geeigneten Längeneinheit ausgegeben werden. In einer weiteren Ausführungsform kann das Fahrzeug auch in einer berechneten Aufsichtdarstellung gemäß der Figur 1 in Beziehung zu Hindernissen in der Umgebung dargestellt werden. Die Anzeigeeinheit 12 kann als eine Leuchtdiodenanzeige ausgeführt sein. In einer weiteren Ausführungsform kann jedoch die Anzeige auch in ein Kombiinstrument mit einer Vielzahl von Anzeigen vor einem Fahrer im Kraftfahrzeug integriert sein. Ferner ist auch die Einblendung in einen Bildschirm möglich, der entweder ebenfalls in dem Kombiinstrument oder in einer Mittelkonsole des Kraftfahrzeugs angeordnet ist.

Ferner ist die Auswerteeinheit 9 mit einem Lautsprecher 14 verbunden, der bei einer zunehmenden Annäherung des Kraftfahrzeugs 1 an ein Hindernis und/oder bei einem Unterschreiten des Mindestabstands ein akustisches Warnsignal an den Fahrer ausgibt. Optional kann ein Wegstreckensensor 15 zur Kontrolle der Abstandsmessung an die Auswerteeinheit 9 angeschlossen werden, indem ein zurückgelegter Weg mit einer Änderung der gemessenen Abstandswerte verglichen wird. Zur Steuerung der Auswerteeinheit ist eine Bedieneinheit 16 mit entsprechenden Bedienelementen 17, z.B. Drucktasten oder Drehknöpfen mit der Auswerteeinheit 9 verbunden. Aus Gründen der Übersichtlichkeit der Zeichnung sind in der Figur 1 nur diejenigen Sensoren dargestellt, die an der Fahrzeugrückseite angeordnet sind. Es können darüber hinaus jedoch auch an den übrigen Fahrzeugseiten Sensoren angeordnet sein, die eine jeweilige Annäherung sich dem Fahrzeug nährender Hindernisse an diesen Fahrzeugseiten erfassen können.

Ferner ist ein Sensor 18 vorgesehen, der dazu dient, zu erfassen, ob das Reserverad 3 an dem Kraftfahrzeug 1 montiert ist. Ist weder die Anhängerkupplung 4 an dem Fahrzeug befestigt, noch detektiert der Sensor 18 eine Anbringung des Reserverads 3, so wird der Fahrer des Fahrzeugs erst dann zu einem Fahrzeugstop aufgefordert, wenn sich die Fahrzeugseite 2 bis zu einem Mindestabstand 19 an die Hauswand 5 angenähert hat. Wird dagegen von dem Sensor 18 eine Anbringung des Reserverades erfasst, das über die Fahrzeugrückseite 2 hinausragt, so wird die Recheneinheit 10 für die Abstandsbestimmung die Abmaße des Reserverades 3 berücksichtigen und bereits dann eine Warnung ausgeben, wenn sich eine Frontseite 21 des Reserverades 3 auf den Mindestabstand 19 an das Hindernis 5 angenähert hat. Die Abmaße des Reserverades 3 sind in der Speichereinheit 11 abgelegt. Ein Hinweis auf den Mindestabstand zu dem Hindernis bzw. eine Aufforderung zum Stoppen des Fahrzeugs wird damit bereits ausgegeben, wenn der Stoßfänger der Fahrzeugrückseite 2 den zweiten Abstand 20 erreicht hat, der zwar geringer ist als der erste Abstand 6, jedoch größer ist als der Mindestabstand 19. Die Abstände sind jeweils in der Figur 1 als Pfeile zu den eingezeichneten Linien eingetragen, wobei die Linien parallel zu der Hauswand 5 verlaufen.

Für die Abmaße des Reserverads 3 ist einerseits der Abstand einer Frontseite 21 des Reserverads zu der Fahrzeugrückseite 2 wichtig, andererseits jedoch auch eine Breite 22 des Reserverads 3, da diese gegebenenfalls bei einem schrägen Heranführen der Fahrzeugrückseite 2 an die Hauswand 5 oder bei einem Heranfahren an ein sehr schmales Hindernis wichtig ist. Einerseits können die Abmaße des Reserverads 3 seitens einer Werkstatt oder seitens des Fahrzeugherstellers in der Speichereinheit 11 abgelegt werden. In einer weiteren Ausführungsform ist es auch möglich, dass ein Benutzer über die Bedienelemente 17 der Bedieneinheit 16 die entsprechenden Abmaße an die Auswerteeinheit 9 übermittelt, die in der Speichereinheit 11 abgelegt werden. Bei dieser Eingabe dient vorzugsweise die Anzeigeeinheit 12 zur Bestätigung der Eingabe.

Zusätzlich kann die Anhängerkupplung 4 an dem Kraftfahrzeug 1 montiert werden. Bei dem hier dargestellten Ausführungsbeispiel ist die Anhängerkupplung 4 dasjenige Bauteil, das noch über das Reserverad 3 hinausragt. Bei der in der Figur 1 dargestellten Position hat damit das Kraftfahrzeug schon den Mindestabstand 19 zu der Hauswand 5 erreicht. Bereits in der gezeigten Position wird über die Anzeigeeinheit 12 oder den Lautsprecher 14 an einen Fahrer des Kraftfahrzeugs 1 die Warnung ausgegeben, dass der Mindestabstand erreicht wurde. In einer bevorzugten Ausführungsform wird dabei berücksichtigt, dass die Ausdehnung der Anhängerkupplung 4 geringer ist als die Breite des Reserverads 3 bzw. des Stossfängers. Somit wird eine Warnung Berücksichtigung hervorragender Bauteile nur dann ausgegeben, wenn sich ein Hindernis in einer Umgebung der Anhängerkupplung, also beispielsweise in einem 20 cm breiten Bereich um die Fahrzeugmitte herum, der Fahrzeugrückseite nähert.

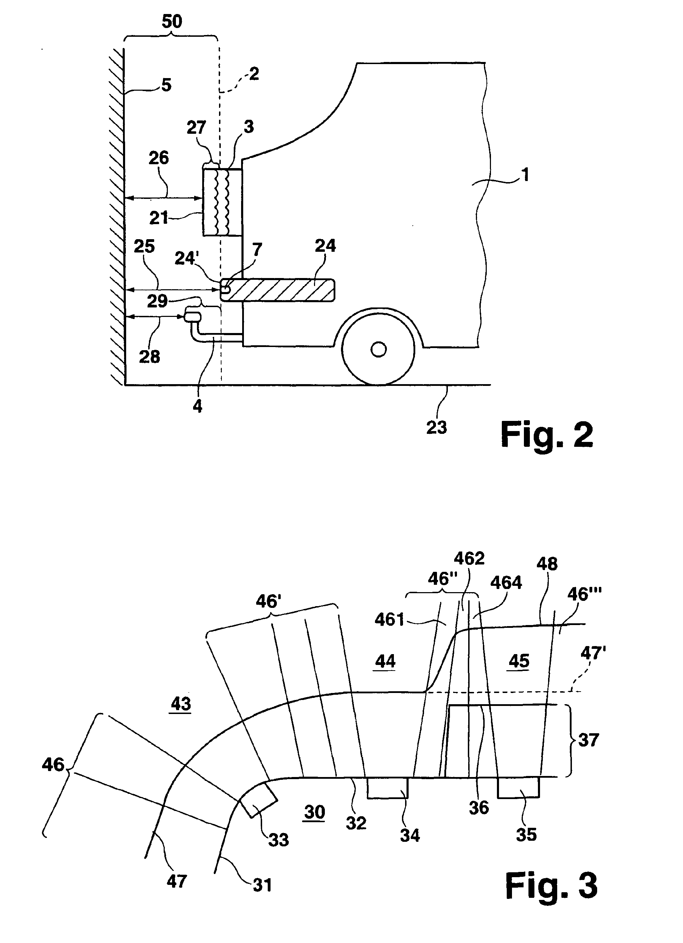

In der Figur 2 ist das Kraftfahrzeug 1 gemäß der Figur 1 in einer Seitenansicht dargestellt, wobei sich das Kraftfahrzeug 1 auf einer Fahrfläche 23 bewegt. Die Sensoren 7 sind an einer Frontseite 24' eines Stoßfängers 24 angeordnet. Die Frontseite 24' des Stoßfängers bildet damit zugleich die äußerste Fahrzeugrückseite 2. Ein Doppelpfeil kennzeichnet dabei einen ersten Abstand 25 des Kraftfahrzeugs 1 zu der Hauswand 5 für den Fall, dass weder das Reserverad 3 noch die Anhängerkupplung 4 an dem Kraftfahrzeug 1 angeordnet sind. Eine Position der Fahrzeugrückseite 2 ist durch eine gestrichelt eingezeichnete Linien senkrecht zu der Fahrfläche 23 und parallel zu der ebenfalls senkrecht zu dem Fahrboden verlaufenden Hauswand 5 dargestellt. Über die gesamte Breite des Kraftfahrzeugs 1 bildet der von der Hauswand 5 und der Linie der Fahrzeugrückseite 2 eingeschlossene Raum einen Bereich 50 zwischen dem Hindernis und der Erfassungsvorrichtung, also den Sensoren 7, die entsprechend ihrer Anordnung an der Frontseite 24' des Stoßfängers 24 unmittelbar an diesen Raum grenzt. Wird nun das Reserverad 3 in einem oberen Bereich an der Fahrzeugrückseite 2 angeordnet, so ragt ein Stück des Reserverads 3 in den Bereich 50 zwischen der Linie der Fahrzeugrückseite 2 und der Hauswand 5 hinein. Das Reserverad 3 vergrößert also die Ausdehnung des Kraftfahrzeugs 1 in Richtung der Hauswand 5, die in dem vorliegenden Fall das Hindernis darstellt. Hierdurch wird der Abstand zwischen dem Kraftfahrzeug 1, zu dem nunmehr auch das Reserverad 3 gehört, und der Hauswand 5 auf den entsprechend als Doppelpfeil dargestellten zweiten Abstand 26 vermindert. Das physikalische Messergebnis der Sensoren 7 wird hierbei nicht verändert, da diese nach wie vor den ersten Abstand 25 zu der Hauswand 5 messen. Durch die Auswerteeinheit 9 werden jedoch die in der Speichereinheit 11 abgelegten Abmaße des Reserverads 3 entsprechend berücksichtigt. Dies kann auf zwei Weisen mit gleichem Ergebnis geschehen: Entweder wird dabei der Wert eines einzuhaltenden Mindestabstands um eine Längendifferenz 27 zwischen der Frontseite 21 des Reserverads 3 und der Linie der Fahrzeugrückseite 2 erhöht oder der erste Abstand 25 wird um die Längendifferenz 27 vermindert, um den tatsächlichen Abstand zu der Hauswand 5 zu erhalten. Beide Verarbeitungsverfahren führen zu dem gleichen Ergebnis, nämlich dazu, dass eine akustische und/oder optische Warnung vor einem Erreichen des Mindestabstandes früher ausgegeben bzw. dass eine entsprechende Anzeige des aktuellen Abstands unter Berücksichtigung der Abmaße des Reserverades 3 verändert wird und gegebenenfalls einen geringeren Abstandswert anzeigt. Gleiches gilt für den Fall, dass die Anhängerkupplung 4 an dem Kraftfahrzeug angebracht ist, wobei diese in dem vorliegenden Ausführungsbeispiel noch über das Reserverad 3 hinausragt. Hierdurch ergibt sich ein tatsächlicher Abstand zwischen dem Kraftfahrzeug 1 und der Hauswand 5, der nunmehr auf einen gegenüber dem ersten Abstand 25 um eine Strecke 29 zwischen der Anhängerkopfkugel und der Linie der Fahrzeugrückseite 2 verkürzten dritten Abstand 28 vermindert ist.

Anstelle der in dem Ausführungsbeispiel gemäß der Figuren 1 und 2 gezeigten Anordnung von drei Sensoren kann an der entsprechenden Fahrzeugseite auch nur ein Sensor bei einer entsprechenden Verringerung der Messgenauigkeit angeordnet sein. Entsprechend kann die Anzahl der Sensoren an einer Fahrzeugseite auch vergrößert werden. Anstelle der als massives Hindernis ausgeführten Hauswand können auch Hindernisse erfasst werden, die nicht die gesamte Fahrzeugbreite aufweisen, z.B. Stangen von Verkehrsschildem. Bezüglich des Verfahrens zu Annäherung an die Hauswand 5 bleibt das Erfassungsverfahren hierbei jedoch gleich.

In der Figur 3 ist ein Ausführungsbeispiel für die Festlegung der Abstandswerte bei einer Verwendung mehrerer Sensoren dargestellt. In der Figur 3 ist hierzu eine Ecke eines Fahrzeugstoßfängers 30 im Detail dargestellt. In einem Eckbereich zwischen einer ersten Fahrzeugseite 31 und einer zweiten Fahrzeugseite 32 ist ein erster Sensor 33 angeordnet. An der zweiten, als Fahrzeugrückseite ausgebildete Fahrzeugseite 32 sind ein zweiter Sensor 34 und ein dritter Sensor 35 angeordnet. Über die zweite Fahrzeugseite 32 erhebt sich ein Reserverad, dessen Außenkontur 36 über die zweite Fahrzeugseite 32 hinausragend dargestellt ist.

Die Fahrzeugumgebung ist in einzelne Zonen aufgeteilt, die von den Sensoren 33, 34, 35 unterschiedlich erfasst werden. Dem ersten Sensor 33 ist eine erste Zone 43 in seinem zentralen Strahlbereich zugeordnet, in dem der erste Sensor 33 ausgesendete reflektierte Signale selbst wieder unmittelbar empfängt, ohne das sie zu einem der anderen Sensoren gelangen. Auch der zweite Sensor 34 weist eine entsprechende zweite Zone 44 und der dritte Sensor 35 eine dritte Zone 45 vor den jeweiligen Sensoren auf. Dazwischen sind Übergangszonen 46, 46', 46" vorgesehen, bei denen die beiden, neben den Zonen jeweils angeordneten Sensoren jeweils das von einem Hindernis in einer dieser Zonen reflektierte Signal empfangen. Die Zone 46" ist in drei Teilzonen 461, 462, 463 unterteilt, wobei für jede Teilzone getrennt ermittelt wird, ob ein Hindernis in die Teilzone eingedrungen ist.

Jeder Zone ist ein erster Mindestabstand 47 zugeordnet, der entsprechend der Außenkontur des Stoßfängers parallel in einem vorgegebenen Abstand zu dem Fahrzeug verläuft, z.B. in einem Abstand von 30 cm. Die Korrektur der Messung ist nicht auf eine Korrektur eines Offset-Wertes beschränkt, sondern es erfolgt eine Korrektur in einer bevorzugten Ausführungsform für alle gemessenen Abstandwerte eines Hindernisses.

Ist das Reserverad 37 an dem Kraftfahrzeug nicht angeordnet, so ist für die Teilzonen 461, 462 und 463, die im Bereich der möglichen Anbauposition des Reserverades liegen, der gestrichelt eingezeichnete erste Mindestabstand 47 festgelegt. Wird dagegen das Reserverad 37 an dem Fahrzeug montiert und wird dies über den Sensor 18 automatisch erfasst oder über die Bedieneinheit 16 der Auswerteeinheit 9 mitgeteilt, so wird ein korrigierter Mindestabstand 48, der größer als der erste Mindestabstand 47' ist und z.B. in seinem Maximum 60 cm beträgt, als ein Mindestabstand für alle betroffen Zone festgelegt, in denen das Reserverad 3 über den Stoßfänger 30 hinausragt. Die Differenz zwischen dem ersten Mindestabstand 47' und dem korrigierten Mindestabstand 48 wird für die Auswertung entweder als ein Offset dem Mindestabstand hinzuaddiert oder von dem gemessenen Abstandswert abgezogen.

In einer ersten Ausführungsform kann dabei der vorgegebene Abstand zwischen dem ersten Mindestabstand 47 und dem durch das Reserverad 37 vorgegebenen korrigierten Mindestabstand 48 springen. Hierdurch kann es jedoch insbesondere bei einem Heranfahren an kleineren Hindernissen zu einem plötzlichen Sprung des Mindestabstands und damit zu einem plötzlichen Sprung bei der Warnung kommen, wenn das Hindernis von einer Zone in eine benachbarte Zone wechselt. Daher ist bei dem hier dargestellten Ausführungsbeispiel mit der Teilzone 461 eine Übergangszone vorgesehen, bei dem eine fließende Anpassung an die Kontur des Reserverades 37 ermöglicht wird. Vorzugsweise wird dabei ein linearer Übergang zwischen dem ersten Mindestabstand 47, der durch die Stoßstangenform vorgegeben ist, und dem durch das Reserverad 37 bestimmten korrigierten Mindestabstand 48 vorgenommen. Hierdurch kommt es bei einer Annäherung eines Hindernisses insbesondere in diesem Bereich nicht zu plötzlichen Sprüngen des Mindestabstands. In einer anderen Ausführungsform ist es auch möglich, eine Vielzahl mit konstanten, sich jedoch leicht unterscheidenden unterschiedlichen Abstandswerten vorzusehen, so dass es an den Grenzen der Zonen nur zu geringen Sprüngen kommt.

Bei dem hier dargestellten Ausführungsbeispiel sind einzelne, gerade verlaufenden Zonen definiert, die sich nicht überschneiden. Der Zonenverlauf kann jedoch beliebig gewählt werden und ist von der Anordnung der Sensoren im Stoßfänger und der Auswertung der empfangenen Signale in der Auswerteeinheit 9 abhängig. Es ist jedoch auch möglich, stattdessen sich überschneidende Zonen zu definieren. Hierbei ist zu beachten, dass bei einer Kreuzmessung nicht ein Abstand senkrecht d.h. normal zu einer Fahrzeugoberfläche vermessen wird, sondern aus dem schräg, zur Oberfläche verlaufenden Signalwert noch der gemessene Abstand in einen Abstand gemäß einer Normalen zu der Fahrzeugoberfläche umgerechnet werden muss. Entsprechend der in der Figur 3 gezeigten, durch die Mindestabstände 47, 48 vorgegebenen Wamschwelle können vorzugsweise parallel zu den Mindestabständen 47, 48 mit größerem Abstand zu dem Fahrzeug jeweils weitere Warnschwellen vorgesehen werden, die den Fahrer entsprechend dem der jeweiligen Warnschwelle zugeordneten Abstand vor einem sich dem Fahrzeug nähernden Hindernis abstandsabhängig warnen.

Entsprechend der Zonenzuordnung ist auch mit einer hierzu geeigneten Erfassungsvorrichtung eine Ortszuordnung eines entsprechenden Hindernisses möglich: Z.B. kann die Position eines Verkehrsschilds bei der oben dargestellten Ausführung einer oder maximal zwei Zonen zugeordnet werden. Der Fahrer kann damit entsprechend der Zonenaufteilung auf die Position des Verkehrsschilds hingewiesen werden.

Ferner ist es auch möglich, jedes Hindernis mit einem Abstand und einem Winkel als Ortskoordinate zu versehen. Um eine derartige Messung durchzuführen, sind im allgemeinen eine Vielzahl von Sensoren erforderlich. Gegebenenfalls können entsprechende karthesische Koordinaten verwendet werden, die eine Position des Hindernisses in Bezug auf die Fahrfläche 23 im Vergleich zu dem Kraftfahrzeug 1 angeben. Hierdurch wird eine genaue Hindemisverfolgung durch den Fahrer und/oder durch die Auswerteeinheit 9 ermöglicht. Die in der Figur 3 angezeigte Zoneneinteilung ermöglicht demgegenüber einen verringerten Rechenaufwand, da hier jeweils nur die Zuordnung eines Hindernisses zu einer Zone erfolgt.

## Patentansprüche

1. Abstandsmessvorrichtung für ein Fahrzeug (1) mit mindestens einer Erfassungsvorrichtung (7) zur Messung eines Abstands zwischen der Erfassungsvorrichtung (7) und einem Hindernis (5) und mit einer Auswerteeinheit (9) zur Auswertung von Daten der Erfassungsvorrichtung (7) und zur Erzeugung einer Warnung für den Fahrer des Fahrzeugs in Abhängigkeit von einem Abstand zwischen dem Fahrzeug (1) und dem Hindernis (5), **gekennzeichnet durch** eine Speichereinheit (11) zur Speicherung der Abmaße von mindestens einem Teil (3, 4), das an dem Fahrzeug (1) angeordnet ist und das in einen Raum (50) zwischen der Erfassungsvorrichtung (7) und dem Hindernis (5) ragt, wobei der Abstand des Fahrzeugs (1) zu dem Hindernis (5) aus den gespeicherten Abmaßen des an dem Fahrzeug (1) angeordneten Teils (3, 4) und aus dem gemessenen Abstand zwischen der Erfassungsvorrichtung (7) und dem Hindernis (5) bestimmt wird.

2. Abstandsmessvorrichtung nach Anspruch 1, **gekennzeichnet durch** einen Sensor (18) zur Erfassung, ob das in den Raum (50) zwischen der Erfassungsvorrichtung (7) und dem Hindernis (5) ragende Teil (3, 4) an dem Fahrzeug (1) angeordnet ist, wobei die Abmaße des Teils (3, 4) zur Abstandsbestimmung zwischen dem Fahrzeug und dem Hindernis dann berücksichtigt wird, wenn das Teil (3, 4) von dem Sensor (18) erfasst wird und wobei die Abmaße zur Abstandsbestimmung zwischen dem Fahrzeug (1) und dem Hindernis (5) nicht berücksichtigt werden, wenn das Teil (3, 4) von dem Sensor (18) nicht erfasst wird.

3. Abstandsmessvorrichtung nach einem der vorherigen Ansprüche, **gekennzeichnet durch** eine Erfassungsvorrichtung mit einer Vielzahl von einzelnen Sensoren (7), deren Daten einzeln und/oder getrennt auswertbar sind.

4. Abstandsmessvorrichtung nach Anspruch 3, **dadurch gekennzeichnet, dass** den einzelnen Sensoren (7) Zonen (43, 44, 45, 46, 46', 46", 46"') zugeordnet sind und dass in Abhängigkeit von den Abmaßen des in den Raum (50) zwischen dem Fahrzeug (1) und dem Hindernis (5) ragenden Teils (3, 4) jeder Zone ein Offsetwert zugeordnet ist, der von dem gemessenen Abstand zwischen der Erfassungsvorrichtung (7) und dem Hindernis (5) abgezogen wird oder der einem einzuhaltenden Mindestabstand (19) hinzuaddiert wird

5. Abstandsmessvorrichtung nach einem der vorherigen Ansprüche, **dadurch gekennzeichnet, dass** die Erfassungsvorrichtung Sensoren (7) zur Aussendung eines elektromagnetischen und/oder akustischen Signals, insbesondere Ultraschall, zur Aufnahme des reflektierten Signals und zur Laufzeitbestimmung des Signals für die Entfernungsbestimmung aus der Laufzeit aufweist.

6. Verfahren zur Abstandsmessung zwischen einem Fahrzeug und einem Hindernis, wobei von einer Erfassungsvorrichtung ein Abstand zwischen dem Hindernis und der Erfassungsvorrichtung gemessen wird, **dadurch gekennzeichnet, dass** Abmaße von mindestens einem an dem Fahrzeug angeordneten Teil gespeichert werden, das sich in einen Raum zwischen der Erfassungsvorrichtung und dem Hindernis erstreckt, und dass der Abstand zwischen dem an dem Fahrzeug angeordneten Teil und dem Hindernis unter Berücksichtigung der Abmaße des Teils aus dem Abstand zwischen der Erfassungsvorrichtung und dem Hindernis als der Abstand zwischen dem Fahrzeug und dem Hindernis bestimmt wird.

7. Verfahren nach Anspruch 6, **dadurch gekennzeichnet, dass** das an dem Fahrzeug angeordnete, mindestens eine, sich in den Raum zwischen der Erfassungsvorrichtung und dem Hindernis erstreckende Teil automatisch erfasst und die Abmaße des Teils für die Abstandsmessung automatisch berücksichtigt werden.

8. Verfahren nach einem der Ansprüche 6-7, **dadurch gekennzeichnet, dass** eine Warnung bei einem Unterschreiten eines Mindestabstands zwischen dem Fahrzeug und dem Hindernis ausgegeben wird.

9. Verfahren nach einem der Ansprüche 6-7, **dadurch gekennzeichnet, dass** einzelnen Sensoren der Erfassungsvorrichtung den Abstand zu dem Hindernis zonenweise erfassen und dass jeder Zone in Abhängigkeit von den Abmaßen des an dem Fahrzeug angeordneten Teils ein Offsetwert zugeordnet wird, der von dem gemessenen Abstand zwischen der Erfassungsvorrichtung und dem Hindernis abgezogen wird oder der zu einem vorgegebenen einzuhaltenden Mindestabstand hinzuaddiert wird.

10. Verfahren nach Anspruch 9, **dadurch gekennzeichnet, dass** für jede Zone ein jeweiliger Mindestabstand zu einem Hindernis vorgegeben wird..

## Claims

1. Distance measuring device for a vehicle (1) having at least one sensing device (7) for measuring a distance between the sensing device (7) and an obstacle (5), and having an evaluation unit (9) for evaluating data from the sensing device (7) and for generating a warning for the driver of the vehicle as a function of a distance between the vehicle (1) and the obstacle (5), **characterized by** a memory unit (11) for storing the dimensions of at least one component (3, 4) which is arranged on the vehicle (1) and which projects into a space (50) between the sensing device (7) and the obstacle (5), the distance between the vehicle (1) and the obstacle (5) being determined from the stored dimensions of the component (3, 4) which is arranged on the vehicle (1) and from the measured distance between the sensing device (7) and the obstacle (5).

2. Distance measuring device according to Claim 1, **characterized by** a sensor (18) for sensing whether the component (3, 4) which projects into the space (50) between the sensing device (7) and the obstacle (5) is arranged on the vehicle (1), the dimensions of the component (3, 4) for determining the distance between the vehicle and the obstacle being taken into account when the component (3, 4) is sensed by the sensor (18), and the dimensions for determining the distance between the vehicle (1) and the obstacle (5) not being taken into account if the component (3, 4) is not sensed by the sensor (18).

3. Distance measuring device according to one of the preceding claims, **characterized by** a sensing device having a multiplicity of individual sensors (7) whose data can be evaluated individually and/or separately.

4. Distance measuring device according to Claim 3, **characterized in that** zones (43, 44, 45, 46, 46', 46", 46"') are assigned to the individual sensors (7), and **in that** an offset value is assigned to each zone as a function of the dimensions of the component (3, 4) which projects into the space (50) between the vehicle (1) and the obstacle (5), said offset value being subtracted from the measured distance between the sensing device (7) and the obstacle (5) or being added to a minimum distance (19) which is to be maintained.

5. Distance measuring device according to one of the preceding claims, **characterized in that** the sensing device has sensors (7) for emitting an electromagnetic and/or acoustic signal, in particular ultrasonic sound, for receiving the reflected signal and for determining the transit time of the signal in order to determine the distance from the transit time.

6. Method for determining the distance between a vehicle and an obstacle, a distance between the obstacle and the sensing device being measured by a sensing device, **characterized in that** dimensions of at least one component, which is arranged on the vehicle and which extends into a space between the sensing device and the obstacle, are stored, and **in that** the distance between the component which is arranged on the vehicle and the obstacle is determined from the distance between the sensing device and the obstacle as the distance between the vehicle and the obstacle, taking into account the dimensions of the component.

7. Method according to Claim 6, **characterized in that** the at least one component which is arranged on the vehicle and extends into the space between the sensing device and the obstacle senses automatically, and the dimensions of the component are taken into account automatically for the measurement of the distance.

8. Method according to one of Claims 6-7, **characterized in that** a warning is issued when the distance between the vehicle and the obstacle drops below a minimum value.

9. Method according to one of Claims 6-7, **characterized in that** individual sensors of the sensing device sense the distance from the obstacle on a zone basis, and **in that** an offset value is assigned to each zone as a function of the dimensions of the component which is arranged on the vehicle, said offset value being subtracted from the measured distance between the sensing device and the obstacle or being added to a predefined minimum distance which is to be maintained.

10. Method according to Claim 9, **characterized in that** a respective minimum distance from an obstacle is predefined for each zone.

## Revendications

1. Dispositif de mesure de distance pour un véhicule (1) comprenant au moins un dispositif de détection (7) pour mesurer une distance entre le dispositif de détection (7) et un obstacle (5), et une unité d'exploitation (9) pour exploiter des données du dispositif de détection (7) et générer un avertissement pour le conducteur du véhicule en fonction d'une distance entre le véhicule (1) et l'obstacle (5),
**caractérisé par**
une unité de mémoire (11) pour stocker les dimensions d'au moins un élément (3, 4) qui, sur le véhicule, (1) fait saillie dans un espace (50) situé entre le dispositif de détection (7) et l'obstacle (5), la distance du véhicule (1) par rapport à l'obstacle (5) étant déterminée à partir des dimensions stockées de l'élément (3, 4) disposé sur le véhicule (1) et à partir de la distance mesurée entre le dispositif de détection (7) et l'obstacle (5).

2. Dispositif de mesure de distance selon la revendication 1,
**caractérisé par**
un capteur (18) pour détecter si l'élément (3, 4) faisant saillie dans l'espace (50) situé entre le dispositif de détection (7) et l'obstacle (5) est disposé sur le véhicule (1), les dimensions de l'élément (3, 4) pour déterminer la distance entre le véhicule et l'obstacle étant prises en compte si l'élément (3, 4) est détecté par le capteur (18), et les dimensions pour déterminer la distance entre le véhicule (1) et l'obstacle (5) n'étant pas prises en compte si l'élément (3, 4) n'est pas détecté par le capteur (18).

3. Dispositif de mesure de distance selon l'une quelconque des revendications précédentes,
**caractérisé par**
un dispositif de détection muni d'une multitude de différents capteurs (7) dont les données sont exploitables individuellement et/ou séparément.

4. Dispositif de mesure de distance selon la revendication 3,
**caractérisé en ce que**
des zones (43, 44, 45, 46, 46', 46", 46'") sont associées aux différents capteurs (7), et en fonction des dimensions de l'élément (3, 4) faisant saillie dans l'espace (50) situé entre le véhicule (1) et l'obstacle (5) une valeur offset est associée à chaque zone, qui est soustraite de la distance mesurée entre le dispositif de détection (7) et l'obstacle (5) et additionnée à une distance minimale (19) à respecter.

5. Dispositif de mesure de distance selon l'une quelconque des revendications précédentes,
**caractérisé en ce que**
le dispositif de détection présente des capteurs (7) pour envoyer un signal électromagnétique et/ou acoustique, en particulier des ultrasons, pour recevoir le signal réfléchi et pour déterminer la durée du signal pour déterminer la distance.

6. Procédé de mesure de distance entre un véhicule et un obstacle, avec un dispositif de détection mesurant une distance entre l'obstacle et le dispositif de détection,
**caractérisé en ce qu'**
on enregistre les dimensions d'au moins un élément disposé sur le véhicule et qui s'étend dans un espace situé entre le dispositif de détection et l'obstacle, et la distance entre l'élément disposé sur le véhicule et l'obstacle est déterminée en tenant compte des dimensions de l'élément à partir de la distance entre le dispositif de détection et l'obstacle.

7. Procédé selon la revendication 6,
**caractérisé en ce qu'**
au moins un élément disposé sur le véhicule s'étendant dans l'espace situé entre le dispositif de détection et l'obstacle est détecté automatiquement, et les dimensions de l'élément sont automatiquement prises en compte pour la mesure de distance.

8. Procédé selon l'un quelconque des revendications 6 - 7,
**caractérisé en ce qu'**
un avertissement est émis lors d'un dépassement d'une distance minimale entre le véhicule et l'obstacle.

9. Procédé selon l'une quelconque des revendications 6 - 7,
**caractérisé en ce que**
différents capteurs du dispositif de détection détectent la distance par rapport à l'obstacle par zones, et on associe à chaque zone en fonction des dimensions de l'élément disposé sur le véhicule, une valeur de décalage soustraite de la distance mesurée entre le dispositif de détection et l'obstacle, ou additionnée à une distance minimale à respecter prédéterminée.

10. Procédé selon la revendication 9,
**caractérisé en ce qu'**
une distance minimale respective par rapport à un obstacle est prédéterminée pour chaque zone.
